# EUROPÄISCHE PATENTSCHRIFT

(11) **EP 0 614 083 B1**
(45) Veröffentlichungstag und Bekanntmachung des Hinweises auf die Patenterteilung: **06.05.1998**
(21) Anmeldenummer: 94101846.7
(22) Anmeldetag: 08.02.1994
(51) Int. Cl.: G01N 27/74

(54) **Gerät zur Bestimmung paramagnetischer Eigenschaften von Stoffen mit einer magnetischen Signalkompensationsvorrichtung**
Apparatus for the determination of paramagnetic characteristics of materials with a device for the magnetic compensation of signals
Appareil pour la détermination des caractéristiques paramagnétiques des matériaux, comprenant une compensation magnétique

(30) Priorität: 27.02.1993 DE 4306183
(43) Veröffentlichungstag der Anmeldung: 07.09.1994
(73) Patentinhaber: DRÄGERWERK AKTIENGESELLSCHAFT, 23542 Lübeck (DE)
(72) Erfinder: Otten, Johann, Dr., D-23611 Bad Schwartau (DE)

(56) Entgegenhaltungen:
- US-A- 2 467 211
- US-A- 2 689 332
- DATABASE WPI Week 8929, Derwent Publications Ltd., London, GB; AN 89213094 & SU-A-1 453 305 (MEDINSTRUMENT TRUST) 23. Januar 1989

## Beschreibung

Die Erfindung betrifft ein Gerät zur Messung des Anteils paramagnetischer Stoffe in einem Stoffgemisch, insbesondere des Sauerstoffes, bei dem eine Küvettenanordnung in einem Magnetfeld rotiert, welches abwechselnd eine Küvettenkammer, gefüllt mit dem nachzuweisenden paramagnetischen Stoff, und eine Referenzkammer, gefüllt mit einer Referenzmaterie, durchdringt, wobei das während der Rotation infolge des unterschiedlichen magnetischen Flusses durch jeweils die Küvettenkammer und die Referenzkammer entstehende magnetische Wechselfeld in einer oder in mehreren Meßfeldspulen ein Induktionswechselspannungssignal erzeugt, das sich zusammensetzt aus einem Meßsignal, hervorgerufen durch die Küvettenkammer, und einem Referenzsignal, hervorgerufen durch die Referenzkammer, und das als Maß für die in der Küvettenkammer befindliche Konzentration an paramagnetischen Stoff herangezogen und an eine Auswerteeinheit geleitet wird, wobei die Küvettenanordnung eine magnetische Kompensationsvorrichtung trägt.

Ein derartiges Gasmeßgerät zur paramagnetischen Bestimmung von Sauerstoff ist aus der US-A-2,689,332 bekannt geworden. Dieses Gerät besitzt ein Vielzahl von Küvetten, die jeweils mit dem zu untersuchenden Gas mit paramagnetischen Eigenschaften gefüllt sind. Eine bestimmte Anzahl von Küvetten werden mit einer gleichen Anzahl von Referenzkammern paarweise zwischen den Polschuhen einer geradzahligen Anzahl von Permanentmagneten entlang geführt. Wegen der Reihenschaltung der Meßfeldspulen um die Permanentmagnete werden Änderungen in der Permeabilität des Küvettenmaterials während der Umdrehung ausgeglichen, da die erzeugten Flußänderungen somit phasengegenläufig sind. Eventuelle Änderungen der Permeabilität, die immer noch nicht ausgeglichen sind, können durch Anbringung geringer Mengen von paramagnetischem Material auf der Küvewttenscheibe ausgeglichen werden. Geeignetes Material hierfür ist rotes Eisenoxid.

Nachteilig bei dem bekannten Gerät ist die aufwendige Ermittlung der geeigneten Stellen für die Anbringung des zusätzlichen paramagnetischen Materials und die Kontrolle darüber, ob die Menge des Materials ausreichend ist. Noch verbleibende Unregelmäßigkeiten müssen durch nachfolgende Signalverarbeitungsschaltkreise kompensiert werden.

Aus der US-A 2, 467, 211 ist ein Gerät zur paramagnetischen Bestimmung von Sauerstoff bekannt, bei welchem sich eine scheibenförmige Küvettenanordnung in einem Magnetfeld dreht. Zur Elimination von Inhomogenitäten des Grundsignals besteht die Küvettenanordnung schichtweise aus diamagnetischem- und paramagnetischem Material. Nachteilig bei dem bekannten Gerät ist, daß genaue Schichtdicken der Materialien einzuhalten sind, und daß eventuell noch zu verbleibende Signalinhomogenitäten durch nachfolgende Signalverarbeitungsschaltkreise kompensiert werden müssen.

Ein weiteres Gerät zu paramagnetischen Bestimmung von Gasen, z.B. Sauerstoff, ist aus der DE-PS 38 40 337 bekanntgeworden. Es kann sowohl bei der Gasanalyse als auch bei der Überwachung von Abwässern eingesetzt werden.

Bei diesem bekannten Gerät dreht sich eine scheibenförmige Küvette in einem Magnetfeld, welches durch Permanentmagnete erzeugt wird, und das die Küvette durchdringt. Die Meßkammern der Küvette bestehen aus einfachen Durchbrüchen in der Scheibe, deren so gebildete Hohlräume mit dem zu untersuchenden Meßgas gespült werden. Die Küvettenkammern sind durch einen mehr oder weniger breiten Materialstreifen der Küvettenscheibe voneinander getrennt. Dieser Materialstreifen dient als Referenzkammer, gefüllt mit dem Material der Küvettenscheibe. Während der Küvettendrehung wird je nach Anzahl der Meßgasküvettenkammern an den Magnetfeldquellen die Meßgasküvettenkammer oder das Küvettenscheibenmaterial vorbeigeführt. Befindet sich in der Küvettenkammer als Meßgas z.B. Sauerstoff, ändert dessen paramagnetische Eigenschaft den Magnetfluß durch die Küvettenkammer, wodurch ein elektrisches Induktionsfeld in einer die Magnetfeldquelle umgebenden Meßfeldspule erzeugt wird. Um ein möglichst empfindliches Meßgerät zu erhalten, ist es wünschenswert, daß Störsignale soweit eliminiert werden, daß auch geringste Mengen an Meßgas noch zweifelsfrei erkennbar sind. Neben der Unterdrückung von Störsignalen ist auch eine stabile Nullwertkalibrierung erforderlich, bei der das sogenannte Nullsignal ermittelt wird. Dies kann auf einfache Weise dadurch geschehen, daß als Kalibriergas z.B. Stickstoff genommen wird, so daß ein paramagnetisch erzeugtes Induktionssignal ausgeschlossen ist. Das so gewonnene Kalibriersignal enthält jedoch immer noch ein störendes Grundsignal. Dessen Ursache liegt darin, daß die Küvettenscheibe unterschiedliche Materialstärken aufweist, nämlich im Bereich der Meßkammer sind im wesentlichen die Meßgasfüllung und eventuell dünne Kammerwände zu berücksichtigen, und im Referenzkammerbereich ist es die -volle Materialstärke der Küvettenscheibe, oder es ist eine Referenzkammer mit einem anderen Gasinhalt als Referenzgas zu berücksichtigen. In allen Fällen ist der Dichteunterschied zwischen den Materialien von Referenzkammer und Meßkammer erheblich, so daß das Grundsignal um ein Vielfaches größer ist als das aufgrund der Gerätekonstruktion erfaßbare minimale Nutzsignal für den Sauerstoffanteil. Auch wenn in aller Regel die Küvettenscheibe aus einem diamagnetischen Material besteht, welches durch Zumischung von para oder ferrimagnetischem Material magnetisch neutralisiert werden kann, so ist dieses Verfahren doch aufwendig, und eine einmal so hergestellte Küvettenscheibe ist nachträglich nicht mehr in ihren magnetischen Eigenschaften im Hinblick auf die Unterdrückung des Grundsignals veränderbar. Selbst wenn die neutralisierte diamagnetische Scheibe selbst auch nur einen geringen Beitrag zum Grundsignal liefern würde, bliebe immer noch die Tatsache, daß durch die erhebliche Dichteunterschiede zwischen Meßgas und Referenzmaterie ein derartig störendes Grundsignal erzeugt wird.

Der vorliegenden Erfindung liegt somit die Aufgabe zugrunde, ein Gerät der genannten Art hinsichtlich seiner magnetischen Kompensationsvorrichtung an der Küvettenanordnung zu verbessern.

Die Lösung der Aufgabe erfolgt dadurch, daß die Kompensationsvorrichtung aus einer Induktionsschleife aus elektrisch leitfähigem Material mit einem Abschlußwiderstand besteht, welche in der Drehebene auf der Küvettenanordnung an einer solchen Stelle angebracht ist, daß die Induktionsschleife während der Rotation der Küvettenanordnung in den Meßfeldspulen eine Kompensationsspannung erzeugt, die von gleicher Amplitude ist wie das infolge der Materialdickenunterschiede zwischen Küvettenkammer und Referenzkammer hervorgerufenene Grundsignal, jedoch einen zum Grundsignal gegenphasigen Verlauf zeigt.

Der Vorteil der Erfindung liegt im wesentlichen darin, daß nach Feststellung der Höhe und Phasenlage des Grundsignals die Kompensationsvorrichtung nachträglich auf die Küvettenanordnung aufgebracht werden kann, wobei eine unmittelbare Erprobung der Wirksamkeit der Kompensation möglich ist. Außerdem sind erforderliche Korrekturen an der Kompensationsvorrichtung leicht zu bewerkstelligen. Ein grundsätzlicher verfahrenstechnischer Vorteil besteht darin, daß das durch Induktion entstehende Grundsignal auch wiederum von einem Kompensationssignal durch eine magnetische Induktion durch die Induktionsschleife aus denselben Magnetfeldquellen eliminiert wird. Somit beruhen sowohl das störende Grundsignal wie auch das korrigierende Kompensationssignal auf der gleichen physikalischen Gesetzmäßigkeit der magnetischen Induktion, so daß die Kompensation des Grundsignals nicht mit zusätzlichen systematischen Fehlern behaftet ist. Damit fallen auch störende Drifteffekte weg, wie z.B. eine Temperaturdrift, auf die insbesondere elektronische Schaltkreise zur Kompensation von Störsignalen anfällig reagieren. Außerdem wird eine aufwendige nachträgliche Signalverarbeitung vermieden, weil das Störsignal (Grundsignal) am Ort seines Entstehens sogleich wieder aufgehoben wird.

In der Regel bestehen die Küvettenanordnungen für ein Gerät zur Bestimmung paramagnetischer Eigenschaften von Stoffen aus einem diamagnetischen Material, um einen Einfluß auf den nachzuweisenden Stoff mit paramagnetischen Eigenschaften zu unterdrücken. Während der Drehung einer solchen Küvette sind Dichteschwankungen sowohl im Bereich des Küvettenmaterials selbst als auch im Bereich der unterschiedlichen Dichten für sowohl Meßgas als auch Referenzgas zu berücksichtigen, wobei fehlendes oder dünneres diamagnetisches Küvettenmaterial signalmäßig wie vorhandenes paramagnetisches Material wirken.

Als einfache Ausgestaltung für eine Küvettenanordnung wählt man eine Kreisscheibe aus diamagnetischem Material, in welche drehachsensymmetrisch Ausschnitte angebracht sind, die mit dem paramagnetischen nachzuweisenden Stoff durchströmbar sind.

Durch die einfache Anbringung der Kompensationsvorrichtung durch eine Induktionsschleife aus elektrisch-leitfähigem Material mit einem Abschlußwiderstand in der Drehebene auf der Küvettenanordnung wird bei geeigneter Größe des Abschlußwiderstandes beim Durchlaufen des Magnetfeldes in der Induktionsschleife eine Spannung induziert, die in der Schleife einen Strom in Abhängigkeit von der Größe des Widerstandes erzeugt, welcher wiederum ein Magnetfeld entstehen läßt, das dem induzierenden Magnetfeld entgegenwirkt. Durch Messung der induzierten Magnetfeldspannungen kann auf einfache Weise festgelegt werden, an welchem Kreiswinkel der sich drehenden Küvettenanordnung die Induktionsschleife anzuordnen ist, um das Kompensationsfeld zu erzeugen.

Eine geeignete Ausbildungsform für die Induktionsschleife besteht darin, daß sie sich in radialer Richtung längs der Küvettenanordnung erstreckt, so daß sie gewissermaßen eine auf dem Küvettenradius liegende lange Symmetrieachse besitzt.

Besteht die Küvettenanordnung wiederum aus einer Kreisscheibe aus diamagnetischem Material, in die drehachsensymmetrisch Ausschnitte angebracht sind, welche mit dem paramagnetischen nachzuweisenden Stoff durchströmbar sind, ist es zweckmäßig, die Schleife in Drehrichtung gesehen nach dem Ausschnitt in einer solchen Winkelstellung anzubringen, daß sie dem vierten Teil des Winkels zwischen benachbarten Ausschnitten entspricht. Sind beispielsweise zwei Ausschnitte vorgesehen, die sich diametral gegenüberliegen, dann ist die Induktionsschleife in einem Winkel von 45 Grad in Drehrichtung gesehen nach dem benachbarten Ausschnitt entfernt anzubringen. Der Anbringungsort für die Induktionsschleife ist aus folgender Betrachtungsweise herleitbar: Der Ausschnitt in der Chopperscheibe erzeugt eine zeitliche Änderung des magnetischen Flusses in den Meßfeldspulen. Daraus folgt eine 90 Grad Phasenverschiebung für die induzierte Spannung in den Meßfeldspulen gegenüber dem magnetischen Fluß. Die Induktionsschleife auf der Chopperscheibe erfaßt ebenfalls eine zeitliche Änderung des magnetischen Flusses, wodurch die in ihr erzeugte Spannung gleichfalls eine 90 Grad Phasenverschiebung zum magnetischen Fluß erfährt, so daß sich diese beiden 90 Grad-Phasenverschiebungen aufheben. Der durch die erzeugte Spannung fließende Induktionsstrom in der Induktionsschleife erzeugt seinerseits wiederum ein Magnetfeld, welches durch die zeitliche Änderung des magnetischen Flusses der Induktionsschleife in den Meßfeldspulen eine Spannung erzeugt, die um weitere 90 Grad phasenverschoben ist; insgesamt ergibt sich also, zusammen mit den 90 Grad aus dem 45 Grad-Versatz der Induktionsschleife, eine Phasenverschiebung um 180 Grad.

Die Anordnung einer Induktionsschleife mit einem Abschlußwiderstand ermöglicht eine einfache Korrektur des Kompensationseffektes durch Verändern des Widerstandswertes. Dieser ist darüber hinaus temperaturstabil, so daß eine Temperaturdrift des Abgleichwiderstandes ausgeschlossen werden kann. Eine derartige Induktionsschleife mit Widerstand ist billig in Dickschichttechnologie, ähnlich wie bei einer Leiterplattenfertigung, herstellbar, wobei Küvettenmaterial aus hochreinem Silizium gewählt werden kann, so daß ein Abgleich der Induktionsspule durch Laserbehandlung der Dickschicht möglich ist.

Bei der Induktionsschleife läßt sich deren Wirksamkeit durch ihre Formgebung noch weiter vervollkommnen. Man wählt zweckmäßigerweise den Verlauf der Schleife so, daß sich ein einigermaßen sinusförmiger Verlauf des magnetischen Flusses in ihr ergibt. Daraus resultiert auch eine angenähert sinusförmige induzierte Spannung, welche sich durch Oberwellenarmut und Vereinfachung der Signalverarbeitung auszeichnet. Die geeignete Gestaltung der Induktionsschleife kann an den auf der Oberfläche angebrachten Kompensationseinrichtungen durch Veränderung der Formgebung leicht festgestellt werden.

Da sämtliche Signale, welche auf einer magnetischen Flußänderung basieren, einen hohen Oberwellengehalt in der induzierten Spannung aufweisen, wird die Signalverarbeitung erschwert. Ferner führt die zeitliche Änderung des magnetischen Flusses zu einer Proportionalität zwischen der Frequenz, das ist der Drehzahl der Küvette, und der Meßspannung. Dies macht eine genaue Drehzahlregelung erforderlich. Beide Schwierigkeiten werden dadurch überwunden, daß das induzierte Wechselspannungsignal einem Integrator als Vorverstärker zugeführt wird. Dadurch werden die Oberwellen reduziert, und weil die Übertragungsfunktion eines Integrators umgekehrt proportional zu der Frequenz ist, wird auch die Frequenz-Abhängigkeit kompensiert. Schließlich hat ein Integrator bei jeder Frequenz eine Phase von 90 Grad. Dies ist ein Vorteil gegenüber bandbegrenzten Vorverstärkern, die eine Abhängigkeit ihrer Phase von der Frequenz oder der Drehzahl zeigen. Eine genaue Drehzahlregulierung wird somit entbehrlich.

Die Ausschnitte der Küvette werden zweckmäßigerweise konzentrisch zur Drehachse angeordnet und als Kreisringsegmente ausgebildet. Sie können ebenso günstig als eine konzentrisch zur Drehachse nierenförmig verlaufende Kontur besitzen.

Ein Ausführungsbeispiel der Erfindung wird anhand der schematischen Zeichnung dargestellt und im folgenden näher erläutert:

Es zeigen:
- Fig. 1: die Schnittdarstellung eines paramagnetischen Meßgerätes,
- Fig. 2: die Draufsicht auf die Küvettenanordnung mit einer Induktionsschleife und einem Metallplättchen,

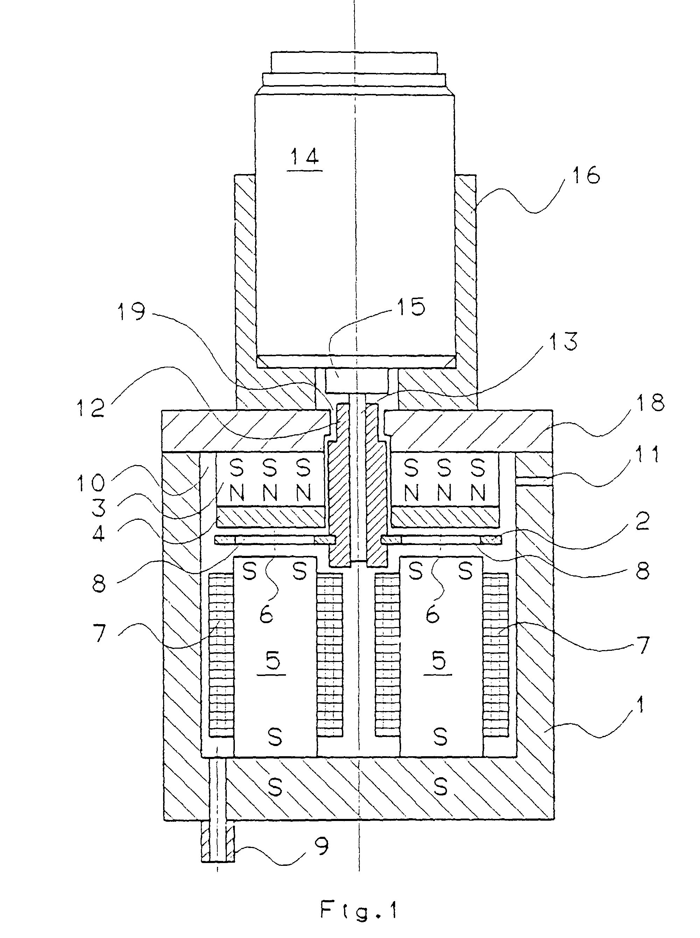

In Fig. 1 ist ein Gerätegehäuse (1) gezeigt, in welchem eine Küvettenanordnung (2) in Form einer auf einer Welle (13) drehbar gelagerten Scheibe aus magnetisch möglichst inertem Material aufgenommen ist. Die Küvette (2) dreht sich in dem Gerätegehäuse (1) zwischen einer Permanent-Magnetplatte (3), welche mit einer Äquipotentialplatte (4) bedeckt ist, und vier Eisenkernen (5), von denen lediglich zwei dargestellt sind. Jeder der Kerne (5) ist von einer Meßfeldspule (7) umgeben, von der jeweils eine Signalleitung zu einem nicht dargestellten Auswertegerät führt. Die Küvette (2) besitzt drehachsensymmetrische Ausschnitte (8), welche im dargestellten Zustand die Stirnflächen (6) der Kerne (5) gegenüber der Magnetplatte (3) freigeben. Der Innenraum der Ausschnitte (8) ist mit einem zu messenden Stoff von paramagnetischen Eigenschaften, wie z.B. Sauerstoff, gefüllt, der über eine Gaszuführung (9), die auch als Flüssigkeitszuführung im Falle einer wäßrigen Probenahme, in den Innenraum des Gehäuses (1) eingeleitet wird, diesen ausfüllt und bis in die als Meßraum (10) zu betrachtende Umgebung der Ausschnitte (8) und der Küvette (2) vordringt, und von dort über einen Auslaß (11) an die Umgebung entweicht. Die Küvette (2) ist an einem Wellenzapfen (12) befestigt, der an der Welle (13) eines Antriebsmotors (14) befestigt und über ein Wellenlager (15) geführt ist. Der Motor (14) und die diesen umgebende Motorhalterung (16) sind mit dem Gehäuseboden (18) verbunden. Der Gehäuseboden (18) trägt zum einen die Magnetplatte (3) und zum anderen besitzt er einen Durchbruch (19) für die Welle (13) und den Wellenzapfen (12). Die Magnetisierungspolung der Magnetplatte (3) ist durch N (Nord) und S (Süd) dargestellt.

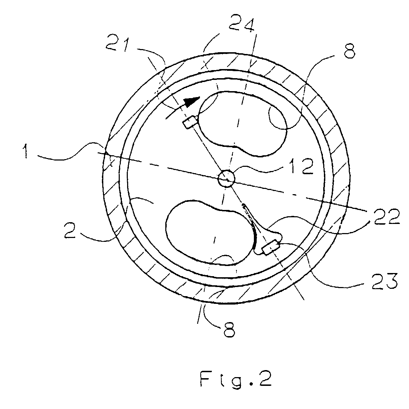

In Fig. 2 ist die Draufsicht auf die Küvette (2) dargestellt, wobei der Schnitt durch das Gehäuse (1) in Höhe der den Eisenkernen (5) zugewandten Oberfläche der Küvettenscheibe (2) durchgeführt ist. Es ist diejenige Oberfläche der Küvette (2) gezeigt, die den Stirnflächen (6) der nicht dargestellten Kerne (5) aus Fig. 1 zugewandt ist. Die Stirnflächen (6) würden oberhalb der Zeichenebene in Höhe der strichpunktierten Symmetrieachsen der Küvettenscheibe (2) positioniert sein. Die Küvette (2) ist in Form einer dünnen Scheibe ausgeführt, die sich um den Wellenzapfen (12) dreht, und zwei annähernd nierenförmige Ausschnitte (8) aufweist. Diese Ausschnitte (8) sind mit einem Gas oder mit einer Flüssigkeit mit paramagnetischen Eigenschaften, z.B. Sauerstoff, ausgefüllt. Die Drehrichtung der Küvettenscheibe (2) ist durch den Richtungspfeil (21) angedeutet. In einem Winkel von 45 Grad zu der Verbindungslinie (Symmetrieachse) zwischen den beiden Ausschnitten (8) ist eine Kompensationseinrichtung in Form einer in sich geschlossenen Induktionsschleife (22) dargestellt, die durch einen Abgleichwiderstand (23) vervollständigt ist. In gleicher radialer Verbindungslinie diametral gegenüberliegend zur Induktionsschleife (22) befindet sich ein Metallplättchen (24). Sowohl Induktionsschleife (22) und Abgleichwiderstand (23) als auch Metallplättchen (24) dienen als Kompensationseinrichtung für das Grundsignal, welches durch das abwechselnde Vorübergleiten der beiden Ausschnitte (8) und des zwischen den Ausschnitten (8) befindlichen Küvetten-Materials in Richtung des Richtungspfeiles (21) entlang der Kerne (5) in den Magnetfeldspulen (7) hervorgerufen wird.

## Patentansprüche

1. Gerät zur Messung des Anteils paramagnetischer Stoffe in einem Stoffgemisch, insbesondere des Sauerstoffes, bei dem eine Küvettenanordnung in einem Magnetfeld rotiert, welches abwechselnd eine Küvettenkammer, gefüllt mit dem nachzuweisenden paramagnetischen Stoff, und eine Referenzkammer, gefüllt mit einer Referenzmaterie, durchdringt, wobei das während der Rotation infolge des unterschiedlichen magnetischen Flusses durch jeweils die Küvettenkammer und die Referenzkammer entstehende magnetische Wechselfeld in einer oder in mehreren Meßfeldspulen ein Induktionswechselspannungssignal erzeugt, das sich zusammensetzt aus einem Meßsignal, hervorgerufen durch die Küvettenkammer, und einem Referenzsignal, hervorgerufen durch die Referenzkammer, und das als Maß für die in der Küvettenkammer befindlichen Konzentration an paramagnetischem Stoff herangezogen und an eine Auswerteeinheit geleitet wird, wobei die Küvettenanordnung eine magnetische Kompensationsvorrichtung trägt, dadurch gekennzeichnet, daß die Kompensationsvorrichtung aus einer Induktionsschleife (22) aus elektrisch leitfähigem Material mit einem Abschlußwiderstand (23) besteht, welche in der Drehebene auf der Küvettenanordnung (2) an einer solchen Stelle angebracht ist, daß die Induktionsschleife (22) während der Rotation der Küvettenanordnung (2) in den Meßfeldspulen (7) eine Kompensationsspannung erzeugt, die von gleicher Amplitude ist wie das infolge der Materialdickenunterschiede zwischen Küvettenkammer (8) und Referenzkammer (2) hervorgerufenene Grundsignal, jedoch einen zum Grundsignal gegenphasigen Verlauf zeigt.

2. Gerät nach Anspruch 1, dadurch gekennzeichnet, daß die Schleife (22) längs der Küvettenoberfläche sich in radialer Richtung längs erstreckend angebracht ist.

3. Gerät nach Anspruch 2, dadurch gekennzeichnet, daß die Küvettenanordnung aus einer Kreisscheibe (2) aus diamagnetischem Material besteht, in die drehachsensymmetrisch Ausschnitte (8) angebracht sind, welche mit dem paramagnetischen nachzuweisenden Stoff durchströmbar sind, und daß die Schleife (22) in Drehrichtung (21) gesehen nach dem Ausschnitt (8) in einer solchen Winkelstellung angebracht ist, daß sie dem vierten Teil des Winkels zwischen benachbarten Ausschnitten (8) entspricht.

4. Gerät nach Anspruch 3, dadurch gekennzeichnet, daß die Ausschnitte als konzentrisch zur Drehachse verlaufende Kreisringsegmente (8) ausgebildet sind.

5. Gerät nach Anspruch 3, dadurch gekennzeichnet, daß die Ausschnitte als eine konzentrisch zur Drehachse nierenförmig verlaufende Kontur (8) ausgebildet sind.

6. Gerät nach einem der Ansprüche 1 bis 5, dadurch gekennzeichnet, daß die Induktionswechselspannung vor der weiteren Signalverarbeitung in der Auswerteeinheit einem Integrator zugeführt wird.

## Claims

1. Device for measuring the amount of paramagnetic materials in a mixture of materials, in particular the amount of oxygen, in which a cuvette arrangement rotates in a magnetic field through which passes alternately a cuvette chamber filled with the paramagnetic material to be detected, and a reference chamber filled with a reference material, whereby the magnetic alternating field produced during rotation due to the different magnetic flux through respectively the cuvette chamber and the reference chamber generates in one or several measurement field coils an induced alternating voltage signal which is composed of a measurement signal generated by the cuvette chamber, and a reference signal generated by the reference chamber, which is used as a measure of the concentration of paramagnetic material in the cuvette chamber and which is conveyed to an evaluation unit, wherein the cuvette arrangement carries a magnetic compensation device, characterised in that the compensation device is composed of an induction loop (22) of electrically conductive material with a terminal resistance (23) which is fitted in the plane of rotation of the cuvette arrangement (2) at a point such that during rotation of the cuvette arrangement (2) the induction loop (22) generates a compensation voltage in the measurement field coils (7) which is of the same amplitude as the basic signal generated as a consequence of the differences in material thickness between the cuvette chamber (8) and the reference chamber (2), but which has the opposite phase to the basic signal.

2. Device according to claim 1, characterised in that the loop (22) is arranged to extend lengthwise in the radial direction along the cuvette surface.

3. Device according to claim 2, characterised in that the cuvette arrangement is composed of a circular disc (2) of diamagnetic material into which are fitted openings (8) which are symmetrical with respect to the axis of rotation and through which the paramagnetic material to be detected can flow, and in that the loop (22) is arranged in the direction of rotation (21) behind the opening at an angular position corresponding to a quarter of the angle between adjacent openings (8).

4. Device according to claim 3, characterised in that the openings are formed as circular ring segments (8) extending concentrically around the axis of rotation.

5. Device according to claim 3, characterised in that the openings are formed with an outline (8) extending in a kidney shape concentrically to the axis of rotation.

6. Device according to one of claims 1 to 5,
characterised in that the induced alternating voltage is supplied to an integrator before further signal processing in the evaluation unit.

## Revendications

1. Appareil de mesure de la teneur en substance paramagnétique dans un mélange de substances, en particulier de l'oxygène, dans lequel un dispositif à cuvette tourne dans un champ magnétique qui traverse en alternance une chambre formant cuvette, remplie de la substance paramagnétique à déceler, et une chambre de référence, remplie d'une substance de référence, le champ magnétique alternant, naissant lors de la rotation, suite au flux magnétique différent traversant respectivement la chambre formant cuvette et la chambre de référence, produisant, dans une ou plusieurs bobines de champ de mesure, un signal de tension alternative d'induction qui se compose d'un signal de mesure, provoqué par la chambre formant cuvette, et d'un signal de référence, provoqué par la chambre de référence, et qui est utilisé comme mesure de la concentration en substance paramagnétique dans la chambre formant cuvette, et envoyé à une unité d'évaluation, le dispositif à cuvette portant un dispositif de compensation magnétique, caractérisé en ce que le dispositif de compensation est constitué par une boucle d'induction (22) en matériau conduisant l'électricité, pourvue d'une résistance terminale (23) qui est disposée, dans le plan de rotation sur le dispositif à cuvette (2), de telle sorte que la boucle d'induction (22), lors de la rotation du dispositif à cuvette (2), produit, dans les bobines de champ de mesure (7), une tension de compensation qui est de la même amplitude que le signal de base provoqué par la différence d'épaisseur de matière entre la chambre formant cuvette (8) et la chambre de référence (2), mais qui décrit un tracé en opposition de phase par rapport au signal de base.

2. Appareil selon la revendication 1, caractérisé en ce que la boucle (22), le long de la surface supérieure de la cuvette, s'étend dans le sens de la longueur, dans la direction radiale.

3. Appareil selon la revendication 2, caractérisé en ce que le dispositif à cuvette est constitué d'une plaque circulaire (2) en matériau diamagnétique, dans laquelle sont ménagées des découpes (8) symétriques à l'axe de rotation, qui sont susceptibles d'être traversées par la substance paramagnétique à détecter, et en ce que la boucle (22), vue dans le sens de rotation (21), est disposée après la découpe (8), selon une position angulaire telle qu'elle corresponde à la quatrième partie de l'angle entre les découpes (8) adjacentes.

4. Appareil selon la revendication 3, caractérisé en ce que les découpes sont conformées en segments d'anneau de cercle (8) concentriques à l'axe de rotation.

5. Appareil selon la revendication 3, caractérisé en ce que les découpes présentent un contour (8) en forme de rein, concentrique à l'axe de rotation.

6. Appareil selon l'une des revendications 1 à 5, caractérisé en ce que la tension alternative d'induction, avant le traitement ultérieur du signal dans l'unité d'évaluation, est envoyée à un intégrateur.
